# EUROPÄISCHE PATENTANMELDUNG

(11) **EP 4 353 543 A1**
(43) Veröffentlichungstag der Anmeldung: **17.04.2024**
(21) Anmeldenummer: 23202343.2
(22) Anmeldetag: 09.10.2023
(51) Int. Cl.: B60R 19/48

(54) **AUSSENVERKLEIDUNGSTEILANORDNUNG FÜR EIN KRAFTFAHRZEUG UND VERFAHREN ZUR MONTAGE EINER AUSSENVERKLEIDUNGSTEILANORDNUNG**

(30) Priorität: 14.10.2022 DE 102022126967
(71) Anmelder: REHAU Automotive SE & Co. KG, 95111 Rehau (DE)
(72) Erfinder: HÄHNEL, Gerd, 08527 Plauen (DE); MÜLLER, Claus, 95028 Hof (DE); TURBANISCH, Fabian, 95444 Bayreuth (DE); YILDIRIM, Mustafa, 95028 Hof (DE)

(57) **Zusammenfassung**

Die Erfindung betrifft eine Außenverkleidungsteilanordnung für ein Kraftfahrzeug, mi einem Bauteil (1) eines Kraftfahrzeuges, das einen Teil der Karosserie des Kraftfahrzeugs bildet oder welches dafür vorgesehen ist mit der Karosserie des Kraftfahrzeuges verbunden zu sein, und mit einem an dem Bauteil (1) angeordneten Umfeld-Detektionselement (2), und mit einer Dekorblende (3), die vor dem Bauteil (1) positioniert ist, wobei die Dekorblende (3) aus einer die Sichtseite (A) der Dekorblende (3) bildenden Frontblende (4), die partiell oder vollständig von aussendbarer Strahlung des Umfeld-Detektionselement (2) oder von empfangbarer Strahlung für das Umfeld-Detektionselement (2) durchstrahlbar ist, und einem die Frontblende (4) rückseitig abschließenden Abdeckelement (5) besteht, wobei die Frontblende (4) und das Abdeckelement (5) zusammen einen Raum (6) einschließen, wobei ein Teil des Umfeld-Detektionselements (2) in dem Raum (6) aufgenommen ist, wobei das Umfeld-Detektionselement (2) durch eine Öffnung (7) in dem Abdeckelement (5) in den Raum (6) hineinragt und, wobei zwischen dem Öffnungsrand (8) und dem Umfeld-Detektionselement (2) wenigstens ein Dichtungselement (9) vorgesehen ist, das so ausgebildet ist, dass das Umfeld-Detektionselement (2) in der Öffnung (7) gleitend verschiebbar ist und der Raum (6) gleichzeitig vor dem Eindringen von Feststoffen oder Fluiden geschützt ist.

## Beschreibung

Die vorliegende Erfindung betrifft eine Außenverkleidungsteilanordnung für ein Kraftfahrzeug und ein Verfahren zur Montage einer derartigen Außenverkleidungsteilanordnung.

Eine Außenverkleidungsteilanordnung für ein Kraftfahrzeug, mit einem Bauteil eines Kraftfahrzeuges, das einen Teil der Karosserie des Kraftfahrzeug bildet oder welches dafür vorgesehen ist mit der Karosserie des Kraftfahrzeuges verbunden zu sein, und mit einem an dem Bauteil angeordneten Umfeld-Detektionselement, und mit einer Dekorblende, die vor dem Bauteil positioniert ist, wobei die Dekorblende aus einer die Sichtseite der Dekorblende bildenden Frontblende, die partiell oder vollständig von aussendbarer Strahlung des Umfeld-Detektionselement oder von empfangbarer Strahlung für das Umfeld-Detektionselement durchstrahlbar ist, und einem die Frontblende rückseitig abschließenden Abdeckelement besteht, wobei die Frontblende und das Abdeckelement zusammen einen Raum einschließen, ist aus dem Stand der Technik bekannt. Als Beispiel sei das Dokument EP 3 473 497 B1 genannt.

Bei aus dem Stand der Technik bekannten Außenverkleidungsteilanordnungen für Kraftfahrzeuge besteht ein Nachteil dahingehend, dass das Umfeld-Detektionselement vollständig in dem Raum zwischen Frontblende und Abdeckelement angeordnet ist. Bei einer Beschädigung der Dekorblende muss dann zwangsläufig die gesamte Einheit inklusive des Umfeld-Detektionselements getauscht werden. Dies führt zu deutlich höheren Reparatur- und Ersatzteilkosten.

Die Erfindung stellt sich daher die Aufgabe eine Außenverkleidungsteilanordnung mit den eingangs beschriebenen Merkmalen anzugeben, die gegenüber dem Stand der Technik eine vereinfachte Montage und Demontage im Reparaturfall aufweist.

Erfindungsgemäß wird diese Aufgabe gelöst durch eine Außenverkleidungsteilanordnung für ein Kraftfahrzeug, mit
- einem Bauteil eines Kraftfahrzeuges, das einen Teil der Karosserie des Kraftfahrzeugs bildet oder welches dafür vorgesehen ist mit der Karosserie des Kraftfahrzeuges verbunden zu sein, und mit
- einem an dem Bauteil angeordneten Umfeld-Detektionselement, und mit
- einer Dekorblende, die vor dem Bauteil positioniert ist,
wobei die Dekorblende aus einer die Sichtseite der Dekorblende bildenden Frontblende, die partiell oder vollständig von aussendbarer Strahlung des Umfeld-Detektionselement oder von empfangbarer Strahlung für das Umfeld-Detektionselement durchstrahlbar ist, und einem die Frontblende rückseitig abschließenden Abdeckelement besteht, wobei die Frontblende und das Abdeckelement zusammen einen Raum einschließen, wobei ein Teil des Umfeld-Detektionselements in dem Raum aufgenommen ist, wobei das Umfeld-Detektionselement durch eine Öffnung in dem Abdeckelement in den Raum hineinragt und, wobei zwischen dem Öffnungsrand und dem Umfeld-Detektionselement wenigstens ein Dichtungselement vorgesehen ist, das so ausgebildet ist, dass das Umfeld-Detektionselement in der Öffnung gleitend verschiebbar ist und der Raum gleichzeitig vor dem Eindringen von Feststoffen oder Fluiden geschützt ist.

Die erfindungsgemäße Außenverkleidungsteilanordnung bietet den Vorteil, dass das Umfeld-Detektionselement nicht ausschließlich in dem Raum angeordnet ist, sondern mit der Karosserie des Kraftfahrzeugs (direkt an einem Bauteil das Teil der Karosserie ist, oder indirekt über ein Bauteil das dafür vorgesehen ist mit der Karosserie verbunden zu sein) verbunden ist und nur ein Teil des Umfeld-Detektionselements in den Raum hineinragt. Im Fall einer Beschädigung der Dekorblende muss diese dann nur von dem Umfeld-Detektionselement heruntergezogen werden und kann gegen eine neue Dekorblende getauscht werden.

Diese lässt sich durch den erfindungsgemäßen Aufbau der Außenverkleidungsteilanordnung entsprechend einfach auf das noch an dem Kraftfahrzeug verbliebene Umfeld-Detektionselement aufschieben. Das Bauteil kann beispielsweise ein Biegeträger oder ein Frontendträger oder ein Seitenwandträger oder ein Heckträger sein.

Die Öffnung kann so in dem Abdeckelement positioniert sein, dass im Verbauzustand der Außenverkleidungsteilanordnung an einem Kraftfahrzeug die gleitende Verschiebung des Umfeld-Detektionselements entlang einer Längsachse des Kraftfahrzeuges möglich ist. In diesem Fall erlaubt die erfindungsgemäße Außenverkleidungsteilanordnung es zudem, dass bei einem Einwirken einer äußeren Kraft (zum Beispiel bei einem Heckunfall oder Frontunfall) auf die Sichtseite der Dekorblende, die Dekorblende auf dem Umfeld-Detektionselement abgleiten kann ohne das Umfeld-Detektionselement zu beschädigen.

Das Dichtungselement kann so ausgebildet sein, dass es zusätzlich eine Einführschräge für das Umfeld-Detektionselement bildet oder aufweist. Hierdurch wird die Montage der Außenverkleidungsteilanordnung erleichtert, da das Umfeld-Detektionselement einfacher in die Öffnung des Abdeckelements eingeführt werden kann. Hierbei kann alternativ auf beiden Seiten der Öffnung eine entsprechende Einführschräge an dem Dichtungselement vorgesehen sein, um zusätzlich auch eine Demontage des Umfeld-Detektionselements bzw. der Außenverkleidungsteilanordnung zu erleichtern.

Das Dichtungselement kann beispielsweise aus einem Elastomeren Werkstoff bestehen. Auf den Gleitflächen des Dichtungselements können zudem die Gleitung erleichternde Beschichtungen (zum Beispiel Beflockungen oder Teflonbeschichtungen) vorgesehen sein.

Die Frontblende ist bevorzugt schalenförmig ausgebildet. Hierdurch ergibt sich ein ausreichend großer Raum zur teilweisen Aufnahme des Umfeld-Detektionselements.

Die Frontblende und das Abdeckelement können stoffschlüssig miteinander verbunden sein. Eine stoffschlüssige Verbindung kann hierbei insbesondere eine Klebeverbindung oder eine Schweißverbindung sein.

Um eine nachträgliche Wartung oder einen Wechsel nur der Frontblende zu erleichtern kann alternativ die Frontblende und das Abdeckelement lösbar miteinander verbunden sein. Für diesen Fall ist als eine bevorzugte Ausführungsform zwischen den Randbereichen der Frontblende und des Abdeckelements eine Dichtung oder ein Dichtmittel vorgesehen.

Das Abdeckelement kann aus einem Polymermaterial bestehen, insbesondere aus einem faserverstärkten oder partikelverstärkten Polymermaterial.

Das Umfeld-Detektionselement kann insbesondere ein Lidarsystem und/oder ein Radarsystem und/oder ein Kamerasystem umfassen. Unter dem Begriff "System" ist insbesondere eine Sende- und/oder Empfangseinheit zu verstehen.

Die Frontblende ist bevorzugt aus einem für sichtbares oder infrarotes Licht transparentem oder transluzenten Polymermaterial ausgebildet. Das transparente oder transluzente Polymermaterial kann insbesondere Polycarbonat, Polymethylmethacrylat, Polystyrol (beispielsweise PS, ABS, ASA), thermoplastisches Polyester (beispielsweise PET, PBT), Polypropylen (PP) oder ein Bioplymer (beispielsweise Zelluloseacetat, Polyhydroxybutyrat, Polymilchsäure, Polyhydroxyalkaonat) umfassen.

Weiterhin Teil der Erfindung ist ein Kraftfahrzeug mit einer Außenverkleidungsteilanordnung wie vorstehend beschrieben.

Ebenfalls Teil der Erfindung ist ein Verfahren zur Montage einer vorstehend beschriebenen Außenverkleidungsteilanordnung an einem Kraftfahrzeug, wobei in einem ersten Verfahrensschritt das Umfeld-Detektionselement an dem Bauteil angeordnet wird und in einem nachfolgenden Verfahrensschritt die Dekorblende über das Umfeld-Detektionselement geschoben wird, indem das Umfeld-Detektionselement in die Öffnung des Abdeckelements eingeführt und ein Teil des Umfeld-Detektionselements in dem Raum aufgenommen wird.

### Ausführungsbeispiele

Im Folgenden wird die Erfindung anhand lediglich Ausführungsbeispiele darstellender Zeichnung erläutert. Es zeigen schematisch:
- Fig. 1: eine Frontalansicht einer Frontblende und einem Abdeckelement;
- Fig. 2: eine rückwärtige Ansicht der Dekorblende bestehend aus dem Abdeckelement und der davorliegenden Frontblende;
- Fig. 3: eine Querschnittsdarstellung durch die Dekorblende aus Fig. 2;
- Fig. 4: eine schematische Querschnittsdarstellung durch eine erfindungsgemäße Außenverkleidungsteilanordnung.

In den Figuren werden gleiche oder funktionsgleiche Elemente mit den gleichen Bezugszeichen versehen.

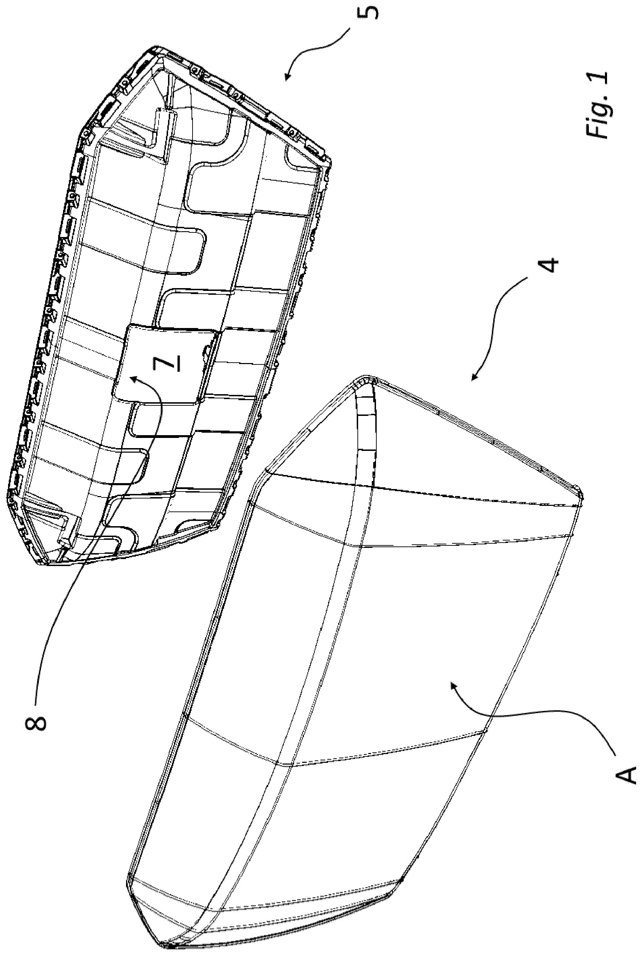

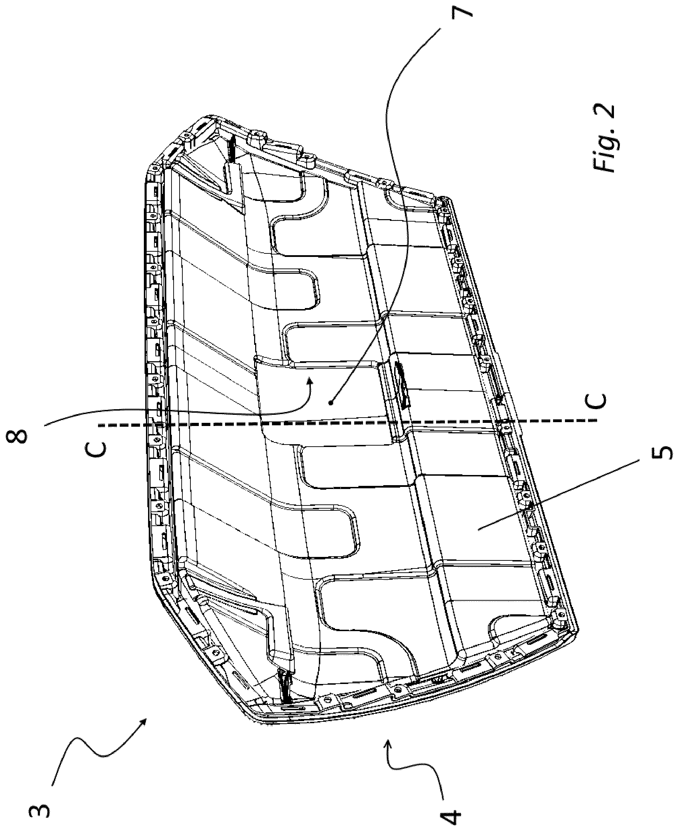

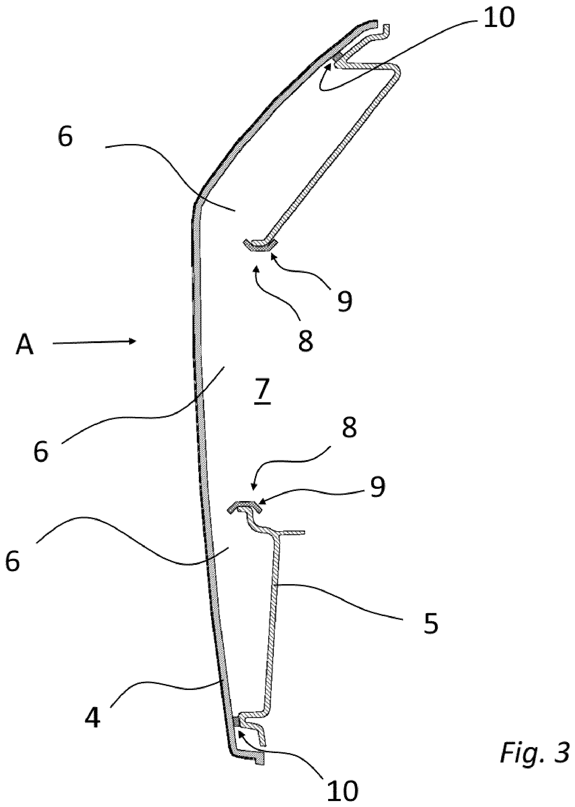

In der Fig. 1 und in der Fig. 2 ist ein Teil einer Außenverkleidungsteilanordnung für ein Kraftfahrzeug dargestellt. Nämlich einer Dekorblende 3, wobei die Dekorblende 3 aus einer die Sichtseite A der Dekorblende 3 bildenden Frontblende 4, die partiell oder vollständig von aussendbarer Strahlung des Umfeld-Detektionselement 2 oder von empfangbarer Strahlung für das Umfeld-Detektionselement 2 durchstrahlbar ist, und einem die Frontblende 4 rückseitig abschließenden Abdeckelement 5 besteht. In Fig. 3 ist zusätzlich noch ein an der Öffnung 8 angeordnetes Dichtungselement 9 erkennbar.

In der Querschnittsdarstellung gemäß der Schnittlinie C-C in Fig. 2 ist in der Fig. 3 erkennbar, dass die Frontblende 4 und das Abdeckelement 5 zusammen einen Raum 6 einschließen.

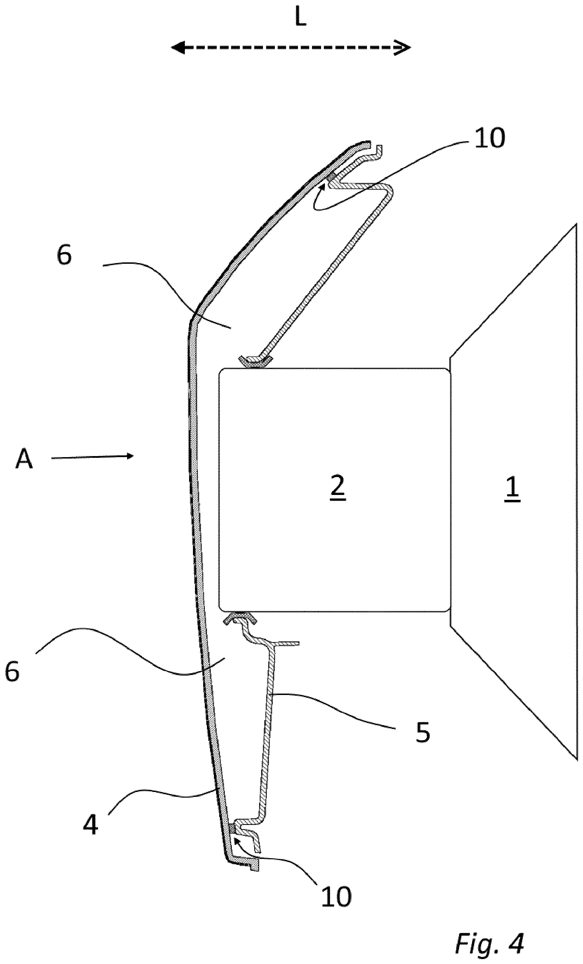

In der Fig. 4 ist die erfindungsgemäße Außenverkleidungsteilanordnung für ein Kraftfahrzeug als schematische Querschnittsdarstellung gezeigt, mit
- einem Bauteil 1 eines Kraftfahrzeuges, das einen Teil der Karosserie des Kraftfahrzeugs bildet oder welches dafür vorgesehen ist mit der Karosserie des Kraftfahrzeuges verbunden zu sein, und mit
- einem an dem Bauteil 1 angeordneten Umfeld-Detektionselement 2, und mit
- einer Dekorblende 3, die vor dem Bauteil 1 positioniert ist,
wobei die Dekorblende 3 aus einer die Sichtseite A der Dekorblende 3 bildenden Frontblende 4, die partiell oder vollständig von aussendbarer Strahlung des Umfeld-Detektionselement 2 oder von empfangbarer Strahlung für das Umfeld-Detektionselement 2 durchstrahlbar ist, und einem die Frontblende 4 rückseitig abschließenden Abdeckelement 5 besteht, wobei die Frontblende 4 und das Abdeckelement 5 zusammen einen Raum 6 einschließen. Ein Teil des Umfeld-Detektionselements 2 ist in dem Raum 6 aufgenommen, wobei das Umfeld-Detektionselement 2 durch eine Öffnung 7 in dem Abdeckelement 5 in den Raum 6 hineinragt und, wobei zwischen dem Öffnungsrand 8 und dem Umfeld-Detektionselement 2 wenigstens ein Dichtungselement 9 vorgesehen ist, das so ausgebildet ist, dass das Umfeld-Detektionselement 2 in der Öffnung 7 gleitend verschiebbar ist und der Raum 6 gleichzeitig vor dem Eindringen von Feststoffen oder Fluiden geschützt ist.

Das Dichtungselement 9 ist so ausgebildet, dass es zusätzlich eine Einführschräge für das Umfeld-Detektionselement 2 bildet oder aufweist. Hierdurch wird die Montage der Außenverkleidungsteilanordnung erleichtert, da das Umfeld-Detektionselement 2 einfacher in die Öffnung 8 des Abdeckelements 5 eingeführt werden kann. Hierbei ist ergänzend auf beiden Seiten der Öffnung 8 eine entsprechende Einführschräge an dem Dichtungselement 9 vorgesehen, um zusätzlich auch eine Demontage des Umfeld-Detektionselements 2 bzw. der Außenverkleidungsteilanordnung zu erleichtern.

In der Fig. 4 ist dargestellt, dass die Öffnung 7 so in dem Abdeckelement 5 positioniert ist, dass im Verbauzustand der Außenverkleidungsteilanordnung an einem Kraftfahrzeug die gleitende Verschiebung des Umfeld-Detektionselements 2 entlang einer Längsachse L des Kraftfahrzeuges möglich ist.

In der Fig. 1 ist erkennbar, dass die Frontblende 4 des Ausführungsbeispiels schalenförmig ausgebildet ist.

Die Frontblende 4 und das Abdeckelement 5 können stoffschlüssig miteinander verbunden sein.

In der Fig. 3 und Fig. 4 ist als Variante dargestellt, dass die Frontblende 4 und das Abdeckelement 5 lösbar miteinander verbunden sind (beispielsweise über Rast- oder Schnappverbindungen). Hierbei ist zwischen den Randbereichen der Frontblende 4 und des Abdeckelements 5 eine Dichtung 10 oder ein Dichtmittel vorgesehen, um einen Zutritt von Fluiden oder Feststoffen über diese Randbereiche zu verhindern.

Das Abdeckelement 5 kann aus einem Polymermaterial bestehen, insbesondere aus einem faserverstärkten oder partikelverstärkten Polymermaterial.

Das gezeigte Umfeld-Detektionselement 2 kann beispielsweise ein Lidarsystem oder ein Radarsystem oder ein Kamerasystem umfassen.

Bei einem Verfahren zur Montage einer vorstehend beschriebenen Außenverkleidungsteilanordnung an einem Kraftfahrzeug kann in einem ersten Verfahrensschritt das Umfeld-Detektionselement 2 an dem Bauteil 1 angeordnet werden und in einem nachfolgenden Verfahrensschritt die Dekorblende 3 über das Umfeld-Detektionselement 2 geschoben werden, indem das Umfeld-Detektionselement 2 in die Öffnung 8 des Abdeckelements 5 eingeführt und ein Teil des Umfeld-Detektionselements 2 in dem Raum 6 aufgenommen wird.

## Patentansprüche

1. Außenverkleidungsteilanordnung für ein Kraftfahrzeug, mit
- einem Bauteil (1) eines Kraftfahrzeuges, das einen Teil der Karosserie des Kraftfahrzeugs bildet oder welches dafür vorgesehen ist mit der Karosserie des Kraftfahrzeuges verbunden zu sein, und mit
- einem an dem Bauteil (1) angeordneten Umfeld-Detektionselement (2), und mit
- einer Dekorblende (3), die vor dem Bauteil (1) positioniert ist,
wobei die Dekorblende (3) aus einer die Sichtseite (A) der Dekorblende (3) bildenden Frontblende (4), die partiell oder vollständig von aussendbarer Strahlung des Umfeld-Detektionselement (2) oder von empfangbarer Strahlung für das Umfeld-Detektionselement (2) durchstrahlbar ist, und einem die Frontblende (4) rückseitig abschließenden Abdeckelement (5) besteht, wobei die Frontblende (4) und das Abdeckelement (5) zusammen einen Raum (6) einschließen,
**dadurch gekennzeichnet, dass**
ein Teil des Umfeld-Detektionselements (2) in dem Raum (6) aufgenommen ist, wobei das Umfeld-Detektionselement (2) durch eine Öffnung (7) in dem Abdeckelement (5) in den Raum (6) hineinragt und, wobei zwischen dem Öffnungsrand (8) und dem Umfeld-Detektionselement (2) wenigstens ein Dichtungselement (9) vorgesehen ist, das so ausgebildet ist, dass das Umfeld-Detektionselement (2) in der Öffnung (7) gleitend verschiebbar ist und der Raum (6) gleichzeitig vor dem Eindringen von Feststoffen oder Fluiden geschützt ist.

2. Außenverkleidungsteilanordnung nach Anspruch 1, **dadurch gekennzeichnet, dass** die Öffnung (7) so in dem Abdeckelement (5) positioniert ist, dass im Verbauzustand der Außenverkleidungsteilanordnung an einem Kraftfahrzeug die gleitende Verschiebung des Umfeld-Detektionselements (2) entlang einer Längsachse (L) des Kraftfahrzeuges möglich ist.

3. Außenverkleidungsteilanordnung nach Anspruch 1 oder 2, **dadurch gekennzeichnet, dass** die Frontblende (4) schalenförmig ausgebildet ist.

4. Außenverkleidungsteilanordnung nach einem der vorstehenden Ansprüche, **dadurch gekennzeichnet, dass** die Frontblende (4) und das Abdeckelement (5) stoffschlüssig miteinander verbunden sind.

5. Außenverkleidungsteilanordnung nach einem der vorstehenden Ansprüche 1 bis 3,
**dadurch gekennzeichnet, dass** die Frontblende (4) und das Abdeckelement (5) lösbar miteinander verbunden sind.

6. Außenverkleidungsteilanordnung nach Anspruch 5, **dadurch gekennzeichnet, dass** zwischen den Randbereichen der Frontblende (4) und des Abdeckelements (5) eine Dichtung (10) oder ein Dichtmittel vorgesehen ist.

7. Außenverkleidungsteilanordnung nach einem der vorstehenden Ansprüche, **dadurch gekennzeichnet, dass** das Abdeckelement (5) aus einem Polymermaterial besteht, insbesondere aus einem faserverstärkten oder partikelverstärkten Polymermaterial.

8. Außenverkleidungsteilanordnung nach einem der vorstehenden Ansprüche, **dadurch gekennzeichnet, dass** das Umfeld-Detektionselement (2) ein Lidarsystem oder ein Radarsystem oder ein Kamerasystem umfasst.

9. Kraftfahrzeug mit einer Außenverkleidungsteilanordnung nach einem der vorstehenden Ansprüche.

10. Verfahren zur Montage einer Außenverkleidungsteilanordnung nach einem der vorstehenden Ansprüche an einem Kraftfahrzeug, **dadurch gekennzeichnet, dass** in einem ersten Verfahrensschritt das Umfeld-Detektionselement (2) an dem Bauteil (1) angeordnet wird und in einem nachfolgenden Verfahrensschritt die Dekorblende (3) über das Umfeld-Detektionselement (2) geschoben wird, indem das Umfeld-Detektionselement (2) in die Öffnung (8) des Abdeckelements (5) eingeführt und ein Teil des Umfeld-Detektionselements (2) in dem Raum (6) aufgenommen wird.
